# EUROPÄISCHE PATENTSCHRIFT

(11) **EP 4 075 077 B1**
(45) Veröffentlichungstag und Bekanntmachung des Hinweises auf die Patenterteilung: **18.12.2024**
(21) Anmeldenummer: 22165050.0
(22) Anmeldetag: 29.03.2022
(51) Int. Cl.: F24S 25/613, F24S 25/70, H02S 20/23

(54) **SOLARMODULBEFESTIGUNGSSYSTEM**
SOLAR MODULE MOUNTING SYSTEM
SYSTÈME DE FIXATION DE PANNEAUX SOLAIRES

(30) Priorität: 15.04.2021 DE 102021109552
(43) Veröffentlichungstag der Anmeldung: 19.10.2022
(73) Patentinhaber: Renusol Europe GmbH, 51063 Köln (DE)
(72) Erfinder: Rossbach, Nils, 51103 Köln (DE)
(74) Vertreter: Patentanwälte Bauer Vorberg Kayser

(56) Entgegenhaltungen:
- EP-A1- 2 474 796
- EP-B1- 2 423 622
- EP-B1- 2 828 588
- US-A1- 2019 190 437
- US-B2- 10 663 195

## Beschreibung

Die Erfindung betrifft ein Solarmodulbefestigungssystem, aufweisend
- einen auf einem Untergrund, insbesondere an einem Dach befestigbaren Grundträger (22) mit einer Grundplatte (24), auf der zumindest zwei einander gegenüberliegende und sich parallel zueinander erstreckende Grundträger-Haltewände (28) angeordnet sind, die gemeinsam mit der Grundplatte (24) eine Bügelträgeraufnahme (34) ausbilden,
- einen Bügelträger (36) mit einem Haltearm (50), der endseitig in einen Befestigungsbereich übergeht, der mit dem Grundträger (22) lösbar verbindbar ist, wobei Bügelträger-Haltewände (40) im befestigen Zustand Innenflächen (30) der Grundträger-Haltewände (28) zugewandte Außenflächen (44) ausbilden, die einen Abstand voneinander aufweisen, der etwa einem Abstand der Innenflächen (30) der Grundträger-Haltewände (28) zueinander entspricht,
- der Bereich zwischen den Grundträger-Haltewände (28) einen Freiraum ausbildet.

Ein solches Solarmodulbefestigungssystem ist aus der EP 2 828 588 B1 bekannt und dient der Befestigung von Solarmodulen auf einem Dach eines Gebäudes. Hierzu wird der Grundträger an einer Dachkonstruktion, beispielsweise an Dachsparren, befestigt. Der an dem Grundträger lösbar befestigte Bügelträger weist einen Befestigungsbereich mit einem mehrere Arme aufweisenden Bügelabschnitt auf, wobei jeder Arm des Bügelabschnitts mit dem Grundträger lösbar verbunden ist. Die beiden Arme werden zu diesem Zweck jeweils in eine Aufnahmenut des Grundträgers eingeführt.

Aus der Offenlegungsschrift EP 2 194 335 A1 ist ein Solarmodulhalter bekannt, der einen lösbar an dem Grundträger befestigbaren Bügelträger aufweist, wobei der Bügelträger einen in zwei Arme übergehenden Verzweigungsbereich aufweist, wobei die Arme einen Abschnitt des Grundträgers zur Befestigung zwischen sich aufnehmen. Aus der Offenlegungsschrift EP 2 093 524 A1 ist des Weiteren ein Solarmodulhalter bekannt, der mit einem freien Endabschnitt in eine Aufnahmenut eines Grundhalters eingreift und sich verhakt.

Auch die Druckschriften US 2019/190437 A1 und US10 663 195 B2 zeigen ähnliche Befestigungsvorrichtungen für Solarkollektoren.

Die bekannten Lösungen sehen somit vor, dass entweder zwei Aufnahmenuten für die freien Enden der Arme vorgesehen und genutzt werden müssen oder dass ein Abschnitt des Grundträgers zwischen die Arme gebracht werden muss. Dies hat zum Einen fertigungstechnische Nachteile, zum Anderen besteht die Gefahr, dass sich die nach oben offenen Aufnahmenuten aufgrund ihres geringen Querschnitts schnell beispielsweise mit Schmutz zusetzen, was ein Einführen der freien Enden der Arme erschwert. Auch die Widerstandskraft gegen Windlasten ist oftmals unzureichend.

Die Druckschrift EP 2 423 622 B1 beschreibt eine Befestigungsvorrichtung mit Haltern für eine Tragschiene.

Der Erfindung liegt die Aufgabe zugrunde, eine alternative Ausführungsform eines solchen Solarmodulbefestigungssystems anzugeben, Dieses soll eine einfache und robuste Konstruktion aufweisen, kostengünstig herzustellen und insbesondere auch schnell und einfach zu montieren sein.

Diese Aufgabe wird erfindungsgemäß durch einen Solarmodulbefestigungssystem mit den Merkmalen des Anspruchs 1 gelöst.

Demnach weist das Solarmodulbefestigungssystem auf
- einen auf einem Untergrund, insbesondere an einem Dach befestigbaren Grundträger mit einer Grundplatte, auf der zumindest zwei einander gegenüberliegende und sich parallel zueinander erstreckende Grundträger-Haltewände angeordnet sind, wobei zwischen den Grundträger-Haltewände ein Freiraum ausgebildet ist und die Grundträger-Haltewände gemeinsam mit der Grundplatte eine Bügelträgeraufnahme ausbilden,
- einen Bügelträger mit einem Haltearm, der endseitig in einen Befestigungsbereich übergeht, der mit dem Grundträger lösbar verbindbar ist, wobei Bügelträger-Haltewände im befestigten Zustand Innenflächen der Grundträger-Haltewände zugewandte Außenflächen ausbilden, die einen Abstand voneinander aufweisen, der etwa einem Abstand der Innenflächen der Grundträger-Haltewände zueinander entspricht,
   wobei
- der Befestigungsbereich einen Befestigungsblock mit etwa quaderförmiger Grundform mit davon abstehenden Federn mit den zwei vertikalen Bügelträger-Haltewänden zur Befestigung an den Grundträger-Haltewänden und einer Horizontalplatte und einer oberen Horizontalplatte, die sich parallel zur Horizontalplatte erstreckt, aufweist, wobei die Horizontalplatten die Bügelträger-Haltewände miteinander verbinden und sich die Horizontalplatte bezogen auf den Querschnitt am unteren, dem Grundträger zugewandten Ende zwischen den vertikalen Bügelträger-Haltewänden befindet und die Federn ausbildet, die seitlich gegenüber den Bügelträger-Haltewände vorstehen,
- sich die Grundträger-Haltewände vertikal erstrecken und in ihren aufeinander zu gerichteten Innenflächen jeweils mehrere parallel verlaufende Aufnahmenuten mit unterschiedlichen Abständen zur Ebene der Grundplatte aufweisen, wobei die Horizontalplatte sich in der gleichen Ebene wie die Federn erstreckt,
- die Bügelträger-Haltewände auf ihren im befestigten Zustand den Grundträger-Haltewände zugewandten Außenflächen jeweils eine der an die Aufnahmenut der Grundträger-Haltewände angepassten Federn aufweisen, wobei die Federn im befestigten Zustand des Bügelträgers an dem der Grundplatte zugewandten Ende des Befestigungsblocks angeordnet sind,
- die Horizontalplatte und die obere Horizontalplatte jeweils eine Durchgangsöffnung aufweisen,
- eine Klemmsicherung durch Gewinde in den Durchgangsöffnungenund eine eingeschraubte und sich an der Grundplatte des Grundträgers abstützende Schraube gebildet ist.

Der Befestigungsblock ist somit kompakt aufgebaut und wird als Ganzes in den zwischen den Grundträger-Haltewände ausgebildeten Freiraum eingeschoben. Die seitlich angeordneten Federn werden dabei in die Aufnahmenut den der Grundträger-Haltewände eingebracht, wodurch der Bügelträger in vertikaler Richtung gehalten ist. Insgesamt ist der zwischen den Grundträger-Haltewänden ausgebildete Freiraum deutlich größer als die im Stand der Technik beschriebenen Nuten zur Aufnahme freier Arme. Der Freiräume kann somit zwar ebenfalls verschmutzt werden, die Reinigung ist aber schnell und einfach, beispielsweise mit einem Besen möglich. Hinzu kommt, dass sich der Freiraum bzw. die Bügelträgeraufnahme aufgrund des großen Querschnitts nicht so schnell mit Schmutz zusetzt.

Ein weiterer Vorteil besteht darin, dass die Biegesteifigkeit des geschlossenen Querschnitts, also bei eingesetztem Befestigungsblock deutlich höher ist, als bei den Systemen nach dem Stand der Technik, insbesondere als bei Systemen mit zwei nach oben offenen einzelnen Aufnahmenuten für die freien Enden von zwei Armen. Die erfindungsgemäße Lösung ermöglicht somit höhere Traglasten, was erhebliche Vorteile für den Kunden mit sich bringt.

Ein weiterer Vorteil besteht darin, dass der Bügelträger keine freien Enden aufweist, die beispielsweise beim Transport oder der Montage beschädigt oder sogar abbrechen können. Durch die Ausbildung des Befestigungsblocks wird ein ausgesprochen robustes und nahezu unzerstörbares Befestigungselement geschaffen. Der Befestigungsblock ist erfindungsgemäß im wesentlichen quaderförmig ausgeführt, weist also einen etwa rechteckigen Querschnitt auf. Bezogen auf den Querschnitt befindet sich am unteren, dem Grundträger zugewandten Ende zwischen den vertikalen Bügelträger-Haltewänden eine die Haltewände verbindende Horizontalplatte. Erfindungsgemäß bildet die Horizontalplatte auch die Federn aus, die seitlich gegenüber den Bügelträger-Haltewände vorstehen. Die Horizontalplatte kann in vertikaler Richtung auch an einer anderen Position als am äußeren Ende im Befestigungsblock angeordnet sein. Auch ist denkbar, dass der Befestigungsblock an jeder Seite jeweils zwei oder sogar mehr Federn aufweist, die in entsprechend mehrere Aufnahmenuten im Grundträgers eingebracht werden können. Dadurch kann die Stabilität zusätzlich erhöht werden.

Vom Befestigungsblock steht vorzugsweise seitlich ein Haltearm ab. Der Haltearm ist vorzugsweise an der dem Grundträger abgewandten Bereich des Befestigungsblocks angeordnet.

Der Befestigungsblock weist eine weitere Horizontalplatte auf, die in einem bevorzugten Ausführungsbeispiel in den Haltearm übergeht. Zusammen mit der unteren Horizontalplatte und den beiden Bügelträger-Haltewänden ergibt sich somit ein Hohlkörper.

Um eine Sicherung des Bügelträgers insbesondere in vertikaler Richtung zu bewirken, ist eine Klemmsicherung vorgesehen. Diese ist durch eine Schraube gebildet, die durch entsprechende Durchgangsöffnungen in den Horizontalplatten in den Befestigungsblock im verbundenen Zustand des Bügelträgers mit dem Grundträger von oben in den Befestigungsblock eingeschraubt werden kann. Zu diesem Zweck weisen die Durchgangsöffnungen geeignete Gewinde auf. Die Schraube stützt sich mit ihrem freien Ende gegen die Grundplatte des Grundträgers ab und bewirkt dadurch ein Verklemmen der Federn in den Aufnahmenuten des Grundträgers in vertikaler Richtung.

Auch der Grundträger selbst weist eine sehr einfache, aber widerstandsfähige Konstruktion auf. Er ist im Wesentlichen durch eine Grundplatte gebildet, von der sich die beiden Grundträger-Haltewände vertikal nach oben erstrecken. Die Grundplatte kann geeignete Elemente zur Befestigung an einer Unterkonstruktion aufweisen, beispielsweise Öffnungen zur Aufnahme von Schrauben. Der Grundträger kann in Abhängigkeit regionaler oder nationaler Bestimmungen oder beispielsweise auch aufgrund von individuellen Gegebenheiten unterschiedlicher Dachformen oder -typen unterschiedlich ausgeführt sein, um eine optimale Befestigung zu gewährleisten.

In einer besonders vorteilhaften Ausführungsvariante weist die dem Untergrund zugewandte Auflagefläche des Grundträgers eine Struktur auf, die den Reibungskoeffizient erhöht, sie ist beispielsweise aufgeraut. Alternativ oder zusätzlich können auch vorstehende Dorne vorgesehen sein, die sich in den Untergrund, insbesondere in eine Dachkonstruktion aus Holz, eindrücken. Solche Dornen oder Riffel behindern auch wirkungsvoll ein Verdrehen auf dem Sparren während der Montage und auch im montierten Zustand.

Die Aufnahmenuten in den Grundträger-Haltewänden erstrecken sich im Wesentlichen parallel zur Haupterstreckungsebene der Grundplatte des Grundträgers und sind nicht nach oben, sondern zur Seite offen ausgebildet. Die seitliche Ausrichtung verhindert wirkungsvoll ein Verschmutzen der Aufnahmenuten. Erfindungsgemäß weisen die Grundträger-Haltewände mehrere sich parallel erstreckende Aufnahmenuten auf, in die die von dem Befestigungsblock des Bügelträgers abstehenden Federn eingebracht werden können. Aufgrund der mehreren Aufnahmenuten wird eine Höhenverstellbarkeit des Bügelträgers relativ zum Grundträger und insbesondere zum Dach, an dem der Grundträger befestigt ist, erzielt. Dadurch ist sichergestellt, dass die Dacheindeckung von dem Bügelträger umgriffen werden kann. Auch lässt sich das Solarmodulbefestigungssystem somit vielseitig, insbesondere an verschiedenen Arten von Dachkonstruktionen und Dacheindeckungen einsetzen.

Die Erfindung wird anhand der nachfolgenden Figuren näher erläutert. Diese stellen lediglich ein bevorzugtes Ausführungsbeispiel dar und sollen nicht einschränkend zu verstehen sein. Die Abmessungen sind dabei nicht maßstäblich, Dimensionen und Abmessungen können auch geändert abweichen. Es zeigen:
- Fig. 1:: ein Solarmodulbefestigungssystem in zusammengesetzten Zustand in Seitenansicht,
- Fig. 2:: einen Bügelträger des Solarmodulbefestigungssystems aus Figur 1 in Seitenansicht,
- Fig. 3:: den Bügelträger aus Figur 1 von oben,
- Fig. 4:: einen Grundträger des Solarmodulbefestigungssystems aus Figur 1 in perspektivischer Darstellung,
- Fig. 5:: das Solarmodulbefestigungssystem aus Figur 1 in perspektivischer Darstellung.

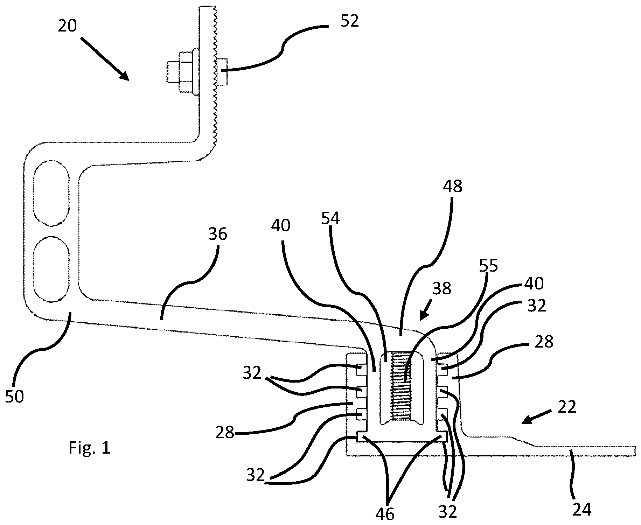

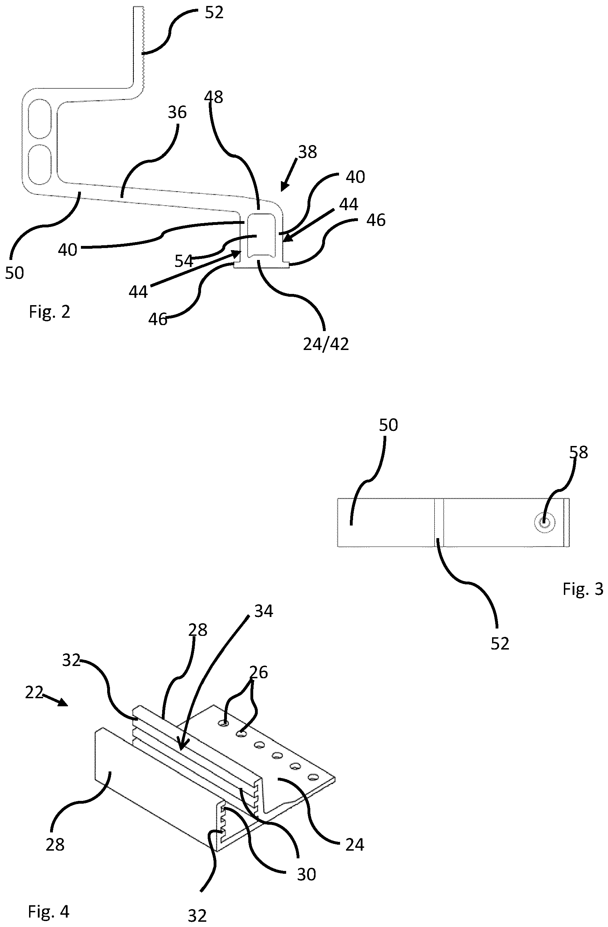

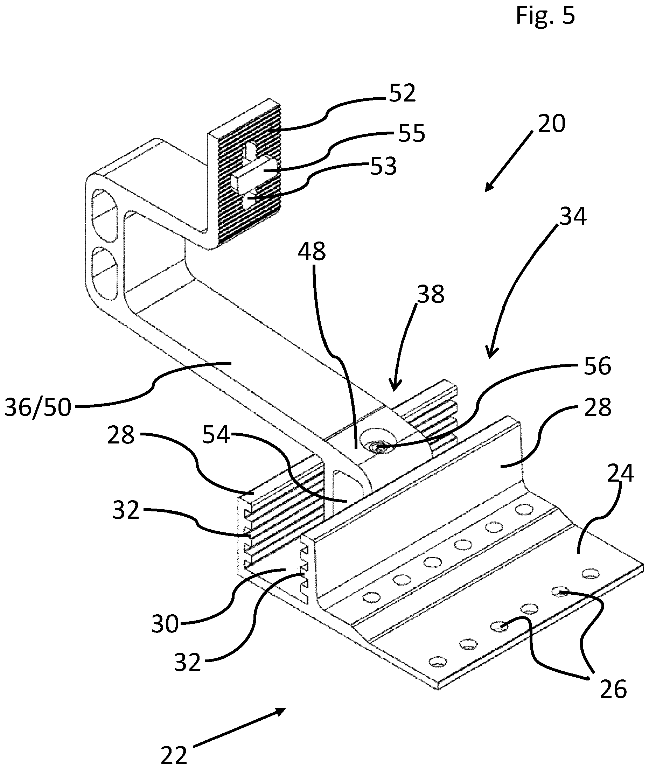

Die Figuren 1 bis 5 zeigen eine bevorzugte Ausführungsvariante eines Solarmodulbefestigungssystems 20. Figur 1 zeigt das Solarmodulbefestigungssystem 20 im zusammengesetzten Zustand. Dieses weist einen auf einem Untergrund befestigbaren Grundträger 22 auf, der in den Figuren 4 und 5 zusätzlich in perspektivischer Darstellung gezeigt ist.

Der Grundträger 22 weist eine Grundplatte 24 auf, die im montierten Zustand auf einem Untergrund aufliegt und an diesem befestigt ist. Zur Befestigung dienen Löcher 26, durch die Befestigungsmittel, insbesondere Schrauben, hindurchgeführt werden können.

Von der Grundplatte 24 erstrecken sich parallel zueinander zwei Grundträger-Haltewände 28 vertikal nach oben. Die beiden Grundträger-Haltewände 28 schließen zur Grundplatte 24 einen rechten Winkel ein. In den einander zugewandten Innenflächen 30 der Grundträger-Haltewände 28 sind im gezeigten Ausführungsbeispiel jeweils vier übereinander angeordnete Aufnahmenuten 32 vorgesehen. Die Aufnahmenuten 32 erstrecken sich parallel zur Haupterstreckungsebene der Grundplatte 24, also in horizontaler Richtung. Die Grundplatte 24 und die beiden Grundträger-Haltewände 28 bilden gemeinsam eine Bügelträgeraufnahme 34 aus.

Die übereinander angeordneten Aufnahmenuten 32 ermöglichen die Aufnahme eines Bügelträgers 36 in unterschiedlichen Höhen bzw. mit unterschiedlichem Abstand zur Grundplatte 24. Dies ermöglicht ein flexibleres und an örtliche Begebenheiten angepasstes Montieren von Solarmodulen beispielsweise auf einem Dach. Insbesondere kann die Montage dadurch an verschiedene Dachziegel mit variierenden Formen und Abmessungen angepasst werden.

Der Bügelträger 36 ist in Figur 2 zusätzlich in Seitenansicht und in Figur 3 von oben gezeigt. Wesentlich ist, dass der Bügelträger 36 einen Befestigungsblock 38 ausbildet, der in die Bügelträgeraufnahme 34, also zwischen die beiden Grundträger-Haltewände 28, einführbar ist.

Der Befestigungsblock 38 weist zwei Bügelträger-Haltewände 40 auf, die über eine Horizontalplatte 42 miteinander verbunden sind.

Außenflächen 44 der Bügelträger-Haltewände 40 weisen einen Abstand voneinander auf, der einem Abstand der Innenflächen 30 der Grundträger-Haltewände 28 zueinander entspricht, abzüglich eines Abstandes, der das Ineinanderschieben ermöglicht und Fertigungstoleranzen berücksichtigt

Von den Außenflächen 44 der Bügelträger-Haltewände 40 stehen jeweils Federn 46 vor, die derart ausgeführt und angeordnet sind, dass sie in die Aufnahmenuten 32 der Innenflächen 30 der Grundträger-Haltewände 28 einführbar sind. Figur 1 zeigt beispielhaft Federn 46, die in der untersten, an die Grundplatte 24 angrenzenden Aufnahmenuten eingeführt sind. Alternativ können die Federn 46 auch in darüber angeordnete Aufnahmenuten 32 eingeführt werden.

Erfindungsgemäß schließen sich die Federn 46 seitlich an die Horizontalplatte 42 an, sie sind also in der gleichen Ebene wie die Horizontalplatte 42 angeordnet, die Horizontalplatte 42 bildet mit ihren Randbereichen die Federn 46 aus.

Wesentlich ist, dass die Bügelträgeraufnahme 34 durch einen U-förmigen Freiraum gebildet ist, der sich zwischen den Grundträger-Haltewänden 28 ausbildet. Dieser Freiraum ermöglicht es, den gesamten Befestigungsblock 38 aufzunehmen.

Der in den Figuren gezeigte erfindungsgemäße Bügelträger 36 weist weiterhin eine obere Horizontalplatte 48 auf, die sich im gezeigten Ausführungsbeispiel parallel zur Horizontalplatte 42 erstreckt und seitlich in einen Haltearm 50 des Bügelträgers 36 übergeht. Der Haltearm 50 ist im gezeigten Ausführungsbeispiel dreifach gekröpft ausgeführt und weist an seinem freien Ende ein Befestigungselement 52 zur Befestigung einer Schiene auf, auf die ein Solarmodul montiert werden kann. Im gezeigten Ausführungsbeispiel weist das Befestigungselement 52 eine geriffelte, strukturierte Oberfläche auf, weiterhin ist ein Langloch 53 zur Befestigung einer nicht gezeigten Modultragschiene in der Fläche des Befestigungselements 52 vorgesehen. Für die Befestigung dient eine Befestigungsschraube 55.

Die Befestigung der Modultragschiene an das Befestigungselement 52 erfolgt seitlich, was eine erleichterte Montage zur Konsequenz hat. Weiterhin ist durch das Langloch 53, dass sich orthogonal zu den Aufnahmenuten 32 erstreckt, eine weitere Höhenverstellbarkeit gegeben, wodurch die Position der Modultragschiene zusätzlich höhenmäßig anpassbar ist.

Der Befestigungsblock 38 weist in Seitenansicht gesehen ein Fenster 54 auf, welches durch die beiden Bügelträger-Haltewände 40 und die Horizontalplatte 42 und die obere Horizontalplatte 48 begrenzt ist. Der Befestigungsblock 38 ist somit in der gezeigten Ausführungsvariante als Hohlkörper ausgeführt.

Figur 1 zeigt weiterhin eine Klemmsicherung, die durch eine Schraube 56 gebildet ist, die sich durch Durchgangsöffnungen 58 in den Horizontalplatten 42, 48 erstreckt. Die Durchgangsöffnungen 58 weisen jeweils ein mit der Schraube 56 korrespondierendes Gewinde auf, sodass die Schraube 56 mit ihrem freien Ende gegen die Grundplatte 24 geschraubt werden kann und sich dort abstützt. Durch die Schraube 56 verklemmen sich die Federn 46 in vertikaler Richtung in den Aufnahmenuten 32.

### Bezugszeichen

- 20: Solarmodulbefestigungssystem
- 22: Grundträger
- 24: Grundplatte
- 26: Löcher
- 28: Grundträger-Haltewände
- 30: Innenfläche
- 32: Aufnahmenuten
- 34: Bügelträgeraufnahme
- 36: Bügelträger
- 38: Befestigungsblock
- 40: Bügelträger-Haltewände
- 42: Horizontalplatte
- 44: Außenflächen Bügelträger-Haltewände
- 46: Federn
- 48: obere Horizontalplatte
- 50: Haltearm
- 52: Befestigungselement
- 53: Langloch
- 54: Fenster
- 55: Befestigungsschraube
- 56: Schraube
- 58: Durchgangsöffnungen

## Patentansprüche

1. Solarmodulbefestigungssystem (20), aufweisend
- einen auf einem Untergrund, insbesondere an einem Dach befestigbaren Grundträger (22) mit einer Grundplatte (24), auf der zumindest zwei einander gegenüberliegende und sich parallel zueinander erstreckende Grundträger-Haltewände (28) angeordnet sind, wobei zwischen den Grundträger-Haltewände (28) ein Freiraum ausgebildet ist und die Grundträger-Haltewände (28) gemeinsam mit der Grundplatte (24) eine Bügelträgeraufnahme (34) ausbilden,
- einen Bügelträger (36) mit einem Haltearm (50), der endseitig in einen Befestigungsbereich übergeht, der mit dem Grundträger (22) lösbar verbindbar ist, wobei Bügelträger-Haltewände (40) im befestigten Zustand Innenflächen (30) der Grundträger-Haltewände (28) zugewandte Außenflächen (44) ausbilden, die einen Abstand voneinander aufweisen, der etwa einem Abstand der Innenflächen (30) der Grundträger-Haltewände (28) zueinander entspricht,
wobei
- der Befestigungsbereich einen Befestigungsblock (38) mit etwa quaderförmiger Grundform mit davon abstehenden Federn (46) mit den zwei vertikalen Bügelträger-Haltewänden (40) zur Befestigung an den Grundträger-Haltewänden (28) und einer Horizontalplatte (42) und einer oberen Horizontalplatte (48), die sich parallel zur Horizontalplatte (42) erstreckt, aufweist, wobei die Horizontalplatten (42, 48) die Bügelträger-Haltewände (40) miteinander verbinden und sich die Horizontalplatte (42) bezogen auf den Querschnitt am unteren, dem Grundträger (22) zugewandten Ende zwischen den vertikalen Bügelträger-Haltewänden (40) befindet und die Federn (46) ausbildet, die seitlich gegenüber den Bügelträger-Haltewände (40) vorstehen, wobei die Horizontalplatte (42) sich in der gleichen Ebene wie die Federn (46) erstreckt,
- sich die Grundträger-Haltewände (28) vertikal erstrecken und in ihren aufeinander zu gerichteten Innenflächen (30) jeweils mehrere parallel verlaufende Aufnahmenuten mit unterschiedlichen Abständen zur Ebene der Grundplatte (24) aufweisen,
- die Bügelträger-Haltewände (40) auf ihren im befestigten Zustand den Grundträger-Haltewände (28) zugewandten Außenflächen (44) jeweils eine der an die Aufnahmenut (32) der Grundträger-Haltewände (28) angepassten Federn (46) aufweisen, wobei die Federn (46) im befestigten Zustand des Bügelträgers (36) an dem der Grundplatte (24) zugewandten Ende des Befestigungsblocks (38) angeordnet sind,
- die Horizontalplatte (42) und die obere Horizontalplatte (48) jeweils eine Durchgangsöffnung (58) aufweisen,
- eine Klemmsicherung durch Gewinde in den Durchgangsöffnungen (58) und eine eingeschraubte und sich an der Grundplatte (24) des Grundträgers (22) abstützende Schraube (56) gebildet ist.

2. Solarmodulbefestigungssystem (20) nach Anspruch 1, **dadurch gekennzeichnet, dass** sich der Haltearm (50) des Bügelträgers (36) seitlich von einer der Bügelträger-Haltewände (40) weg erstreckt.

## Claims

1. A solar module mounting system (20) having
- a base support (22), mountable on a substrate, in particular on a roof, with a base plate (24) on which at least two base support retaining walls (28) are arranged extending opposite and parallel to one another, a free space being formed between the base support retaining walls (28) and the base support retaining walls (28) forming a bracket support receptacle (34) together with the base plate (24),
- a bracket support (36) with a holding arm (50) which transitions on an end side into a mounting area and which is detachably connectable to the base support (22), the bracket support retaining walls (40) in the mounted state forming outer surfaces (44) facing inner surfaces (30) of the base support retaining walls (28), said outer surfaces having a distance from one another which approximately corresponds to a distance of the inner surfaces (30) of the base support retaining walls (28),
wherein
- the mounting area has a mounting block (38) with an approximately cuboidal based shape, with tongues (46) projecting therefrom, with the two vertical bracket support retaining walls (40) for mounting on the base support retaining walls (28), and a horizontal plate (42) and an upper horizontal plate (48) which extends parallel to the horizontal plate (42), the horizontal plates (42, 48) connecting the bracket support retaining walls (40) to each other, and the horizontal plate (42) being located, with respect to the cross section, at the lower end between the vertical bracket support retaining walls (40) facing the base support (22) and forming the tongues (46) which project laterally with respect to the bracket support retaining walls (40), the horizontal plate (42) extending in the same plane as the tongues (46),
- the base support retaining walls (28) extend vertically and respectively have, in their inner surfaces (30) facing one another, multiple accommodation grooves running parallel at different distances to the plane of the base plate (24),
- in their mounted state, the bracket support retaining walls (40) respectively have on their outer surfaces (44) facing the base support retaining walls (28) one of the tongues (46) adapted to the accommodation groove (32) of the base support retaining walls (28), the tongues (46) being arranged on the end of the mounting block (38) facing the base plate (24) in the mounted state of the support bracket (36).
- the horizontal plate (42) and the upper horizonal plate (48) each have a through opening (58),
- a safety clamp is formed by threads in the through openings (58) and a screw (56) screwed into and supported on the base plate (24) of the base support (22).

2. Solar module mounting system (20) according to claims 1, **characterized in that** the holding arm (50) of the support bracket (36) extends laterally away from one of the bracket support retaining walls (40).

## Revendications

1. Système de fixation de module solaire (20), comportant
- un support de base (22), pouvant être fixé sur un fond, en particulier sur un toit, avec une plaque de base (24) sur laquelle sont disposées au moins deux parois de maintien de support de base (28) opposées l'une à l'autre et s'étendant parallèlement l'une par rapport à l'autre, sachant qu'un espace libre est constitué entre les parois de maintien de support de base (28) et les parois de maintien de support de base (28) constituent en commun avec la plaque de base (24) un logement d'étrier de support (34),
- un étrier de support (36) avec un bras de maintien (50), qui passe en extrémité dans une zone de fixation, qui peut être reliée de façon amovible au support de base (22), sachant que les parois de maintien de l'étrier de support (40) constituent à l'état fixé les surfaces intérieures (30) des surfaces extérieures (44) tournées vers les parois de maintien de support de base (28), qui comportent un intervalle l'une par rapport à l'autre, qui correspond à peu près à une distance des surfaces intérieures (30) des parois de maintien de support de base (28),
sachant que
- la zone de fixation comporte un bloc de fixation (38) avec une forme de base à peu près parallélépipédique avec des ressort (46) faisant saillie de celui-ci avec les deux parois de maintien d'étrier de support (40) verticales pour la fixation sur les parois de maintien de support de base (28) et une plaque horizontale (42) et une plaque horizontale supérieure (48), qui s'étend parallèlement à la plaque horizontale (42), sachant que les plaques horizontales (42, 48) relient les parois de maintien d'étrier de support (40) entre elles et la plaque horizontale (42) se trouve, en référence à la section, à l'extrémité inférieure tournée vers le support de base (22) entre les parois de maintien d'étrier de support (40) et constitue les ressorts (46), qui font saillie latéralement par rapport aux parois de maintien d'étrier de support (40), sachant que la plaque horizontale (42) s'étend dans le même plan que les ressorts (46),
- les parois de maintien de support de base (28) s'étendent verticalement et comportent dans leurs surfaces intérieures (30) à orienter l'une sur l'autre respectivement plusieurs rainures de logement passant parallèlement avec des intervalles différents par rapport au plan de la plaque de base (24),
- les parois de maintien d'étrier de support (40) comportent sur leurs surfaces extérieures (44) tournées vers les parois de maintien de support de base (28) à l'état monté respectivement un des ressorts (46) adaptés à la rainure de logement (32) des parois de maintien de support de base (28), sachant que les ressorts (46) sont disposés à l'état monté de l'étrier de support (36) à l'extrémité du bloc de fixation (38) tournée vers la plaque de base (24),
- la plaque horizontale (42) et la plaque horizontale supérieure (48) comportent respectivement une ouverture de passage (58),
- une sécurisation de serrage est formée par filetage dans les ouvertures de passage (58) et une vis (56) vissée et s'appuyant sur la plaque de base (24) du support de base (22).

2. Système de fixation de module solaire (20) selon la revendication 1, **caractérisé en ce que** le bras de maintien (50) de l'étrier de support (36) s'étend latéralement au-delà de l'une des parois de maintien d'étrier de support (40).
